# EUROPEAN PATENT APPLICATION

(11) **EP 2 278 819 A2**
(43) Date of publication of application: **26.01.2011**
(21) Application number: 10251204.3
(22) Date of filing: 05.07.2010
(51) Int. Cl.: H04N 13/00

(54) **Moving image recording method and apparatus, and moving image coding method and moving image coder**

(30) Priority: 16.07.2009 JP 2009167708
(71) Applicant: FUJIFILM Corporation, Tokyo (JP)
(72) Inventor: Watanabe, Mikio, Kurokawa-gun, Miyagi (JP); Nakamura, Satoshi, Kurokawa-gun, Miyagi (JP)
(74) Representative: Stevens, Jason Paul

(57) **Abstract**

A moving image recording apparatus for a moving image file (82) of a three dimensional moving image is provided, and includes a parallax detection device (46) for determining parallax information (88, ΔX, ΔY) of parallax of one principal object commonly present in images (GL, GR) of an image set from multiple view points among image sets of a stream for the three dimensional moving image. A compressor (40) compresses the images in still image compression coding for separately coding the images in the three dimensional moving image, to obtain compressed image data. A recording control unit (63) records in a storage medium (19, 64) the moving image file constituted by plural blocks (86) each of which includes the compressed image data of the image set and the parallax information from the parallax detection device. Preferably, the object is a face region of a person. The still image compression coding is JPEG coding.

## Description

### BACKGROUND OF THE INVENTION

### 1. Field of the Invention

The present invention relates to a moving image recording method and apparatus, and moving image coding method and moving image coder. More particularly, the present invention relates to a moving image recording method and apparatus in which right and left eye images retrieved in forms of moving images can be processed with high quality to obtain a video stream, and moving image coding method and moving image coder.

### 2. Description Related to the Prior Art

A moving image of a three dimensional view is produced by processing right and left eye images photographed at two view points in a three dimensional camera. To this end, various recording methods are known. U.S.P. Nos. 5,767,898 and 6,075,556 (corresponding to JP-A 8-070475) discloses synthesis of right and left eye images alternately per one scan in a horizontal direction. A synthesized moving image is compressed by coding of the MPEG format. Also, U.S.P. No. 5,923,869 (corresponding to WO 97/032437) discloses compression of right and left eye images to dispose plural frames of the right and left sides alternately in a frame number equal to or more than 1 GOP. The compressed images are recorded by interleaving in one image file. Furthermore, right and left eye images are compressed in two separate files in the motion JPEG format, and are synchronized by use of the time stamp for display.

The compression of the MPEG coding in U. S. P. Nos. 5, 767, 898 and 6,075,556 (corresponding to JP-A 8-070475) and U.S.P. No. 5, 923, 869 (corresponding to WO 97/032437) carries out the frame correlation processing according to the motion estimation, to form a B frame and P frame. However, there is a drawback in that distortion due to the compression is conspicuous typically in the still image display of three B frame and P frame in the moving image, so that quality of the three dimensional view will be low.

In the field of the autostereoscopic display, parallax information of parallax is obtained between portions of a principal object present commonly in the right and left eye images (such as a face of a person, article at the center or the like). In order to reduce physical fatigue of a viewer's eyes observing the three dimensional image, right and left eye images are corrected to reduce the parallax information to zero at the object in the three dimensional display. However, it is necessary to carry out the frame correlation processing for the MPEG compression. Additional processing for the parallax information will complicate the operation excessively. Also, a problem arises in low correctness in the parallax information of a B frame and P frame.

If the right and left eye images are compressed in two separate image files in the motion JPEG format, precision of the time stamp must be exactly high. Should a small error occurs in the time stamp, no moving image can be displayed three-dimensionally.

### SUMMARY OF THE INVENTION

In view of the foregoing problems, an object of the present invention is to provide a moving image recording method and apparatus in which right and left eye images retrieved in forms of moving images can be processed with high quality to obtain a video stream, and moving image coding method and moving image coder.

In order to achieve the above and other objects and advantages of this invention, a moving image recording a moving image recording method for a moving image file of a three dimensional moving image is provided, and includes a step of determining parallax information of parallax of one principal object commonly present in images of an image set captured simultaneously from multiple view points. The images are compressed in still image compression coding for separately coding the images in the image set, to obtain compressed image data. In a storage medium is recorded the moving image file constituted by plural blocks each one of which includes the compressed image data of the image set and the parallax information being determined.

Furthermore, before the determining step, the images of the image set are captured periodically.

The images in the image set are right and left eye images.

The determining step includes detecting the object in the right and left eye images. A feature point of the detected object is detected from a particular one of the right and left eye images.

A relevant point corresponding to the feature point is retrieved from a remaining image in the right and left eye images. A difference is determined between pixel positions of the feature point and the relevant point, to obtain the parallax information.

The object is a face region of a person.

The feature point and the relevant point are a pupil portion or iris portion in the face region of the person.

The still image compression coding is JPEG coding.

Furthermore, the recorded moving image file is expanded. The expanded image file is corrected according to the parallax information for each one of the blocks to minimize the parallax information of the image set. The corrected image file is compressed according to moving image compression coding for sequential compression according to information of correlation between the images.

The moving image compression coding is MPEG coding.

Also, a moving image recording apparatus for a moving image file of a three dimensional moving image is provided, and includes a parallax detection device for determining parallax information of parallax of one principal object commonly present in images of an image set from multiple view points among image sets of a stream for the three dimensional moving image. A compressor compresses the images in still image compression coding for separately coding the images in the three dimensional moving image, to obtain compressed image data. A recording control unit records in a storage medium the moving image file constituted by plural blocks each of which includes the compressed image data of the image set and.the parallax information from the parallax detection device.

Furthermore, an expansion device expands the recorded moving image file. A correction device corrects the expanded image file from the expansion device according to the parallax information for each one of the blocks to minimize the parallax information of the image set. A moving image compressor compresses the corrected image file from the correction device according to moving image compression coding for sequential compression according to information of correlation between the images.

In one preferred embodiment, a moving image coding method for a moving image file of a three dimensional moving image includes a step of determining parallax information of parallax of one principal object commonly present in images of an image set from multiple view points among image sets of a stream for the three dimensional moving image. The images are compressed in still image compression coding for separately coding the images in the three dimensional moving image, to obtain compressed image data. In a storage medium is recorded the moving image file constituted by plural blocks each of which includes the compressed image data of the image set and the parallax information being determined. The recorded moving image file is expanded. The expanded image file is corrected according to the parallax information for each one of the blocks to minimize the parallax information of the image set. The corrected image file is compressed according to moving image compression coding for sequential compression according to information of correlation between the images.

Also, a moving image coder for a moving image file of a three dimensional moving image is provided, and includes a parallax detection device for determining parallax information of parallax of one principal object commonly present in images of an image set from multiple view points among image sets of a stream for the three dimensional moving image. A compressor compresses the images in still image compression coding for separately coding the images in the three dimensional moving image, to obtain compressed image data. A recording control unit records in a storage medium the moving image file constituted by plural blocks each of which includes the compressed image data of the image set and the parallax information from the parallax detection device. An expansion device expands the recorded moving image file. A correction device corrects the expanded image file from the expansion device according to the parallax information for each one of the blocks to minimize the parallax information of the image set. A moving image compressor compresses the corrected image file from the correction device according to moving image compression coding for sequential compression according to information of correlation between the images.

In another preferred embodiment, a computer-executable program for moving image coding of a moving image file of a three dimensional moving image is provided, and includes a program code for determining parallax information of parallax of one principal object commonly present in images of an image set from multiple view points among image sets of a stream for the three dimensional moving image. A program code is for compressing the images in still image compression coding for separately coding the images in the three dimensional moving image, to obtain compressed image data. A program code is for recording in a storage medium the moving image file constituted by plural blocks,each of which includes the compressed image data of the image set and the parallax information from the parallax detection device.

Furthermore, a program code is for expanding the recorded moving image file. A program code is for correcting the expanded image file from the expansion device according to the parallax information for each one of the blocks to minimize the parallax information of the image set. A program code is for compressing the corrected image file from the correction device according to moving image compression coding for sequential compression according.to information of correlation between the images.

Consequently, right and left eye images retrieved in forms of moving images can be processed with high quality to obtain a video stream, because parallax information is considered and recorded together within the moving image file.

### BRIEF DESCRIPTION OF THE DRAWINGS

The above objects and advantages of the present invention will become more apparent from the following detailed description when read in connection with the accompanying drawings, in which:
Fig. 1 is a perspective view illustrating a three dimensional camera;
Fig. 2 is a rear perspective view illustrating the three dimensional camera;
Fig. 3 is a block diagram schematically illustrating circuit elements in the three dimensional camera;
Fig. 4 is a block diagram schematically illustrating a parallax detection device;
Fig. 5 is an explanatory view illustrating a moving image file in a two dimensional mode;
Fig. 6 is an explanatory view illustrating the moving image file in a three dimensional mode;
Fig. 7 is an explanatory view illustrating a relationship between states of images before and after the correction;
Fig. 8 is a flow chart illustrating operation of the three dimensional camera;
Fig. 9 is a flow chart illustrating operation of the parallax detection device;
Fig. 10 is a block diagram schematically illustrating a moving image recording apparatus;
Fig. 11 is an explanatory view illustrating operation of an image processor;
Fig. 12 is an explanatory view illustrating the moving image file after MPEG coding.

### DETAILED DESCRIPTION OF THE PREFERRED EMBODIMENT(S) OF THE PRESENT INVENTION

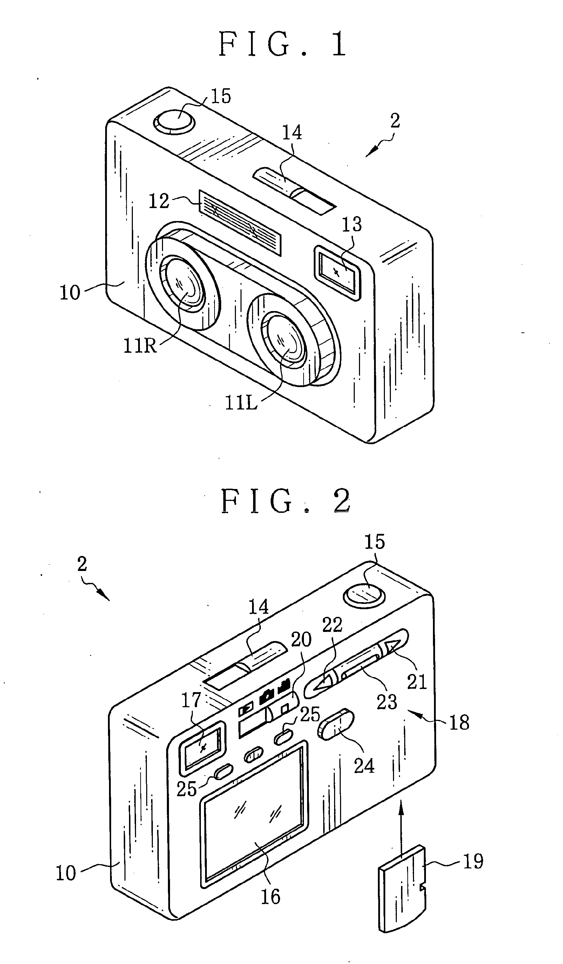

In Figs. 1 and 2, a three dimensional camera 2 includes a camera body 10 of a box shape, and is an instrument for photographing an object at two view points to form a three dimensional image. Elements disposed on a front surface of the camera body 10 include lens systems 11L and 11R, a flash light source 12 and an objective window 13 of a viewfinder.

Each of the lens systems 11L and 11R includes a plurality of lenses/lens groups, such as a main lens, magnification lens, focusing lens and the like. The lens systems 11L and 11R are symmetric with each other with respect to the center of the front surface of the camera body 10. A base line length of the camera body 10 is an interval between the lens systems 11L and 11R in the longitudinal direction, and is specifically 60 mm. A convergence angle defined between optical axes of the lens systems 11L and 11R is 1.5 degrees.

A power switch 14 and a release button 15 are disposed on an upper surface of the camera body 10. The release button 15 is a two step switch. An LCD display panel 16 or electronic viewfinder is used for framing of an object in a still image mode. When the release button 15 is depressed down to a halfway step in the course of the framing, various steps required before image pickup are carried out, including a control of an exposure condition (AE), auto focusing (AF) and the like. Then the release button 15 is depressed fully, to photograph one image in the determined condition. In a moving image mode, image pickup is started upon the full depression of the release button 15. When the release button 15 is depressed fully for a second time, the recording is terminated. Also, a microphone (not shown) picks up sounds or voices detected at a near distance from the camera body 10.

On a rear surface of the camera body 10 are disposed an eyepiece window 17 of the viewfinder, an input panel 18 and the LCD 16. The LCD 16 displays various images and information of an operation menu, the images including a recorded image read from a memory card 19 as storage medium, a live image and the like. A lenticular lens (not shown) is disposed on a front surface of the LCD 16 for the three dimensional view. The eyepiece window 17 constitutes an electronic viewfinder together with the objective window 13.

The input panel 18 includes an operation mode selector 20, a forward button 21, a reverse button 22, a zoom button 23, a view selector 24 for view modes of dimensionality, and a confirmation button 25. When the operation mode selector 20 is slid, a selected one of operation modes is set for an image on the LCD 16, the modes including a reproduction mode, a still image mode of image pickup, and a moving image mode of image pickup. The zoom button 23 is operated to move the magnification lens in the lens systems 11L and 11R for zooming toward the wide-angle end position or the telephoto end position. When the view selector 24 is operated, one of the view modes is set, the view modes including a two dimensional mode for image pickup through one of the lens systems 11L and 11R and a three dimensional mode for image pickup through both of those.

An openable door (not shown) is disposed on a lower surface of the camera body 10. When the door is opened, openings or slots (not shown) appear, and are used for loading of the memory card 19, a battery (not shown) and the like removably.

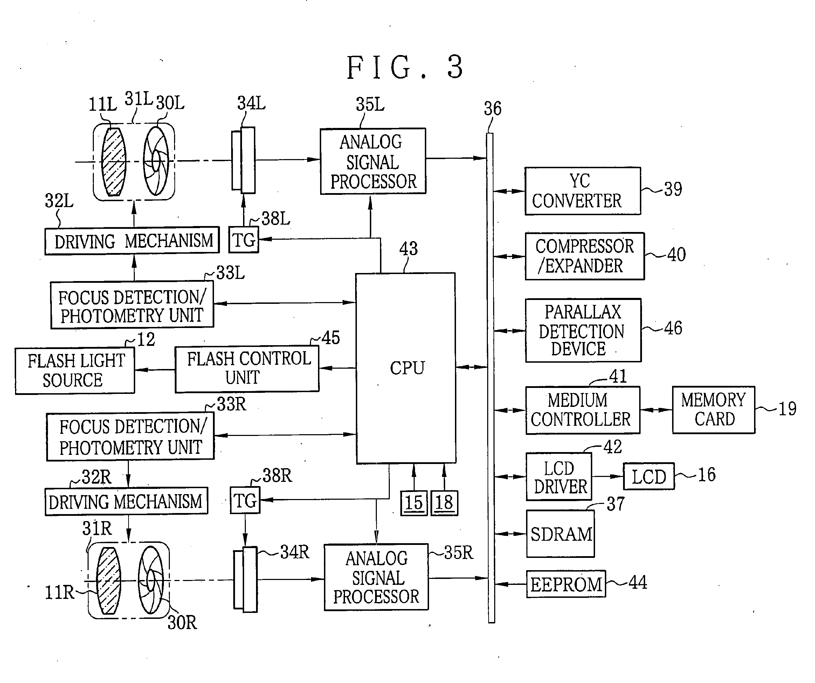

In Fig. 3, aperture stop devices 30L and 30R are disposed behind respectively the lens systems 11L and 11R. Lens assemblies 31L and 31R are constructed by the lens systems 11L and 11R and the aperture stop devices 30L and 30R. Driving mechanisms 32L and 32R are associated with respectively the lens assemblies 31L and 31R. A stepping motor is included in the driving mechanisms 32L and 32R, and moves a magnification lens in the lens systems 11L and 11R toward one of the wide-angle end position and the telephoto end position in response to a signal generated with the zoom button 23. Focus detection/photometry units 33L and 33R output signals to control the driving mechanisms 32L and 32R, to stop a focus lens in the lens systems 11L and 11R in the in-focus position by movement on the optical axis. Also, the aperture stop devices 30L and 30R are driven by the driving mechanisms 32L and 32R to open and close to adjust a diameter of the aperture stop.

CCDs 34L and 34R are disposed behind respectively the lens assemblies 31L and 31R. An example of the CCDs 34L and 34R is an interline transfer CCD image sensor which is compatible for progressive scan in the reading. The CCDs 34L and 34R are disposed so that image light from an object passed through the lens assemblies 31L and 31R becomes incident upon their image pickup surface. A color filter of plural color segments is formed on the image pickup surface of the CCDs 34L and 34R, for example, a filter of primary colors in a Bayer pattern.

Each of analog signal processors 35L and 35R includes a correlated double sampling device (CDS), an automatic gain control device (AGC), and an A/D converter. The CDS processes an image signal from the CCD 34L or 34R in the correlated double sampling to remove reset noise and amplification noise which may be due to the CCDs 34L and 34R. The AGC amplifies the image signal from the CDS at a predetermined input gain. The A/D converter converts the amplified image signal into a digital signal of a predetermined number of bits.

The image signal of the digital form is processed by an image processor (not shown) for various functions of processing such as white balance adj ustment, gamma correction and the like. There is a data bus 36, to which a SDRAM 37 is connected as a working memory. The image signal after the processing is sent by the data bus 36 and input and written to the SDRAM 37 in a temporary manner.

Timing generators (TG) 38L and 38R generate drive pulses from the CCDs 34L and 34R and sync pulses for the analog signal processors 35L and 35R. Examples of the drive pulses include a vertical/horizontal scanning pulse, electronic shutter pulse, reading pulse, reset pulse and the like. The CCDs 34L and 34R photograph an image in response to the drive pulses from the timing generators 38L and 38R, and output an image signal at a constant frame rate. Elements included in the analog signal processors 35L and 35R are driven according to the sync pulses from the timing generators 38L and 38R.

A YC converter 39 reads an image from the SDRAM 37, and converts the signal of R, G and B into a luminance signal Y and chrominance signals Cr and Cb in the YC conversion. A compressor/expander 40 compresses the converted data of the image in the JPEG format of coding. A medium controller 41 writes the compressed image data to the memory card 19. The image written to the memory card 19 is transmitted by the medium controller 41, stored in the SDRAM 37 in a temporary manner, and then read by the compressor/expander 40 and expanded in a form of the image before the compression. Note that two combinations of the SDRAM 37, the YC converter 39 and the compressor/expander 40 are installed in the manner similar to the CCDs 34L and 34R. A second one of the combinations is not depicted for the purpose of clarity.

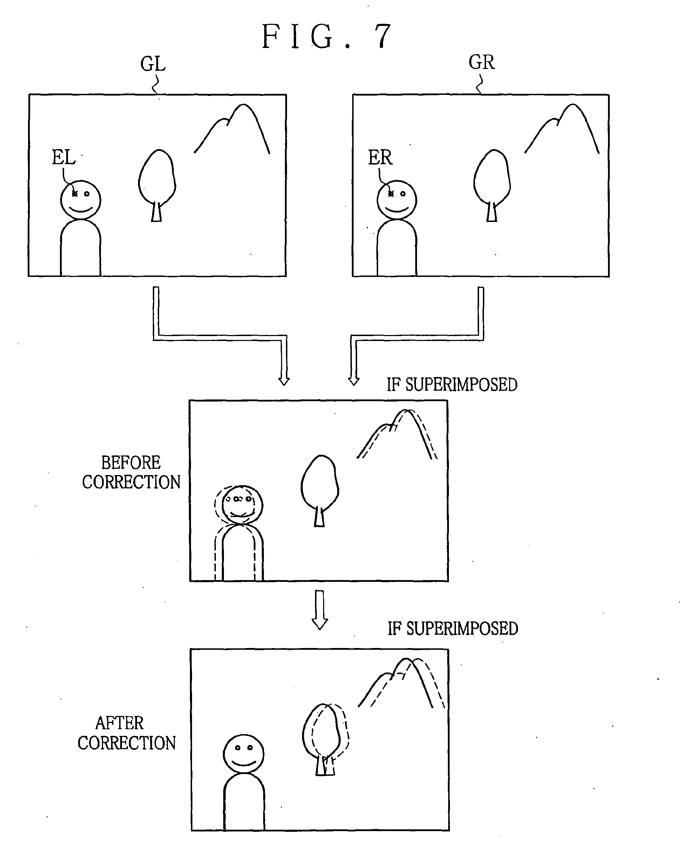

If the two dimensional mode is set by use of the view selector 24, one of the CCDs 34L and 34R is operated, for example, the CCD 34L. If the three dimensional mode is set, both of the CCDs 3,4L and 34R are driven and output right and left eye images GL and GR of Fig. 7 simultaneously.

Note that the term of right and left eye images is used herein to mean right and left component images for the three dimensional view, and does not mean images of eyes of a person.

An LCD driver 42 converts the image after the YC conversion in the YC converter 39 into a composite signal of an analog form, and causes the LCD 16 to display a live image. The LCD driver 42 also causes the LCD 16 to display an image expanded by the compressor/expander 40.

In the three dimensional mode of image pickup, or for reproduction of a three dimensional image obtained according to the three dimensional mode, the LCD driver 42 outputs a composite image to the LCD 16, the composite image being formed by two groups of stripe regions which are obtained from the right and left eye images GL and GR in an alternate manner line by line. A lenticular lens is disposed in front of the LCD 16, and causes display of the three dimensional image by directing the right eye image GR to a viewer's right eye and the left eye image GL to his or her left eye.

A CPU 43 sends control signals to various elements in the three dimensional camera 2 through a control bus (not shown), and receives reply signals from the elements to control those entirely. An EEPROM 44 is connected to the CPU 43 in addition to the release button 15, the input panel 18 and the like, and stores a program and profile information for control. The CPU 43 receives an input signal from the release button 15, performs tasks of various elements according to halfway and full depressions of the release button 15. An input signal is generated by the input panel 18 to cause the CPU 43 to drive the various elements. Also, the CPU 43 reads programs and data to an internal RAM from the EEPROM 44.

The focus detection/photometry units 33L and 33R detect brightness of an object and a distance to the object, to determine an exposure amount, white balance correction amount, and focal length according to the detected brightness and distance.

The focus detection/photometry units 33L and 33R operate cyclically while a live image is displayed. At the same time, the driving mechanisms 32L and 32R are actuated according to an exposure amount determined by the focus detection/photometry units 33L and 33R, to control an aperture diameter of the aperture stop devices 30L and 30R. If the exposure amount cannot be optimized only changing the aperture diameter, then charge storing time of the CCDs 34L and 34R is controlled.

When the release button 15 is depressed halfway, the focus detection/photometry units 33L and 33R start detecting the brightness and distance, and successively send a result of the detection to the CPU 43. According to the detection result, the CPU 43 controls a flash control unit 45, the lens systems 11L and 11R, the aperture stop devices 30L and 30R, the CCDs 34L and 34R and the like.

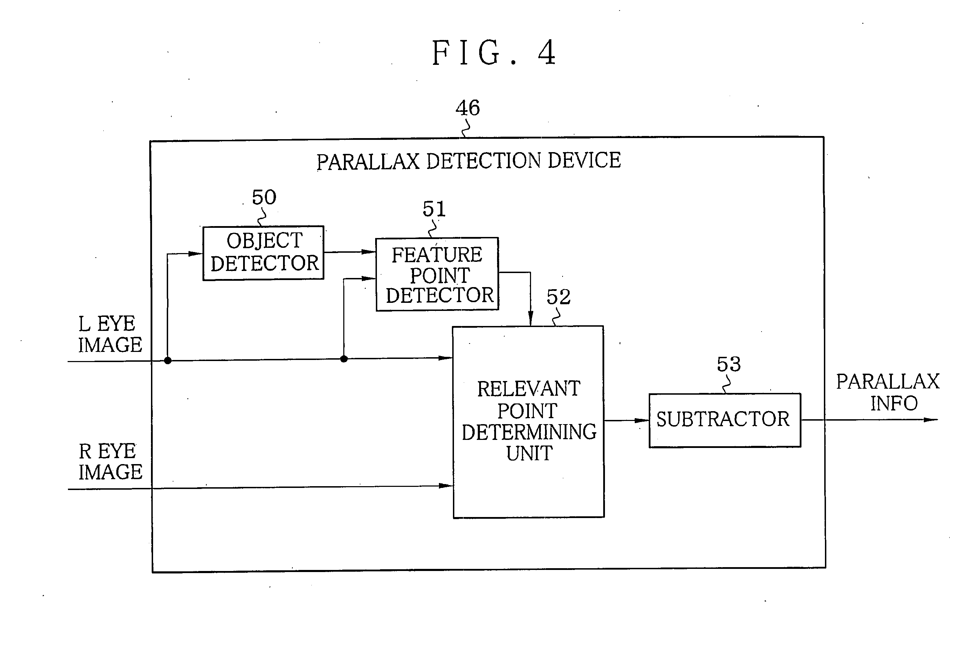

A parallax detection device 46 operates only in the three dimensional mode. The parallax detection device 46 reads the right and left eye images GL and GR from the SDRAM 37 before the YC conversion, and arithmetically determines parallax information of parallax of a feature point of a principal object commonly present in the right and left eye images GL and GR. In Fig. 4, the parallax detection device 46 includes an object detector 50, a feature point detector 51, a relevant point determining unit 52, and a subtractor 53 or arithmetic determining unit.

The object detector 50 detects a face region of a person as a principal object from the left eye image GL. To this end, candidate pixels with the flesh color are extracted from numerous pixels in the image. A portion of the flesh color is obtained from a set of the extracted pixels in the image. The portion of the flesh color is checked in comparison with template information of a face region according to a well-known pattern recognition technique, to judge whether the portion constitutes a face region. If the portion of the flesh color has an area equal to or more than a threshold, the portion is extracted as a face region. Furthermore, a well-known pattern recognition technique is used for extracting specific parts of a face region, such as eyes, a nose, a mouth or the like.

If plural persons are present in the left eye image GL, the object detector 50 determines a principal object among one of the persons, for example, one at the nearest distance, having a face region with a largest area, or the nearest to the center of the image. If no person is determined in the left eye image GL, the object detector 50 determines a principal object from one of the persons the nearest to the center of the image.

The feature point detector 51 extracts a pupil portion or iris portion EL of Fig. 7 of one eye (right eye) as a feature point from a human face of a person as principal object according to a detection signal from the object detector 50. For the extraction of the pupil portion or iris portion EL, a pattern recognition as a well-known technique is used in a manner similar to the object detector 50.

The relevant point determining unit 52 detects a pupil portion or iris portion ER (See Fig. 7) of a right eye image GR corresponding to the pupil portion EL in the left eye image GL according to a result of extraction in the feature point detector 51. Examples of methods for detection of a relevant point include a block matching method, a KLT (Kanade Lucas Tomasi) tracker method, and the like. A point with highest correlation to the feature point is determined as a relevant point. To the subtractor 53, the feature point detector 51 and the relevant point determining unit 52 output information of respectively the pupil portions EL and ER in the right and left eye images GL and GR. For pixel positions, an X-Y coordinate system is used, in which an origin (0,0) is at a lower left corner of an image, an X axis is a horizontal direction, and a Y axis is a vertical direction. If there are 1068x768 pixels in total, coordinates of a point at an upper right corner of the frame is (1067, 767).

A feature point and relevant point may be other points than the above pupil portion or iris portion EL. A feature point can be pixels where a pixel value changes characteristically within the principal object area 35. Preferable examples of the feature point are pixels at corners, end points or the like where the pixel value changes horizontally and vertically. The feature point and relevant point may be two or more points. Examples of methods of extracting a feature point are Harris algorithm, Moravec method, Shi-Tomasi's method and the like. If no face region is detected in the left eye image GL, a feature point of an object at the center of the image is extracted by the above method.

The subtractor 53 determines differences ΔX and ΔY of the X and Y coordinates of the pupil portions EL and ER from the feature point detector 51 and the relevant point determining unit 52. Note that the unit of the differences ΔX and ΔY is the pixel. ΔX is parallax information of parallax produced by disposing the lens systems 11L and 11R in the longitudinal direction of the camera body 10. ΔY is parallax information of parallax produced by disposing the lens systems 11L and 11R vertically from their optical axis. It is further possible to input the right eye image GR to the object detector 50 and the feature point detector 51 in addition to the left eye image GL, so as to determine an object and feature point. Also, parameters related to a projective transformation and affine transformation may be determined and output as parallax information, the parameters being used for geometric transformation of translation, rotation, scaling, trapezoidal distortion, and the like of images.

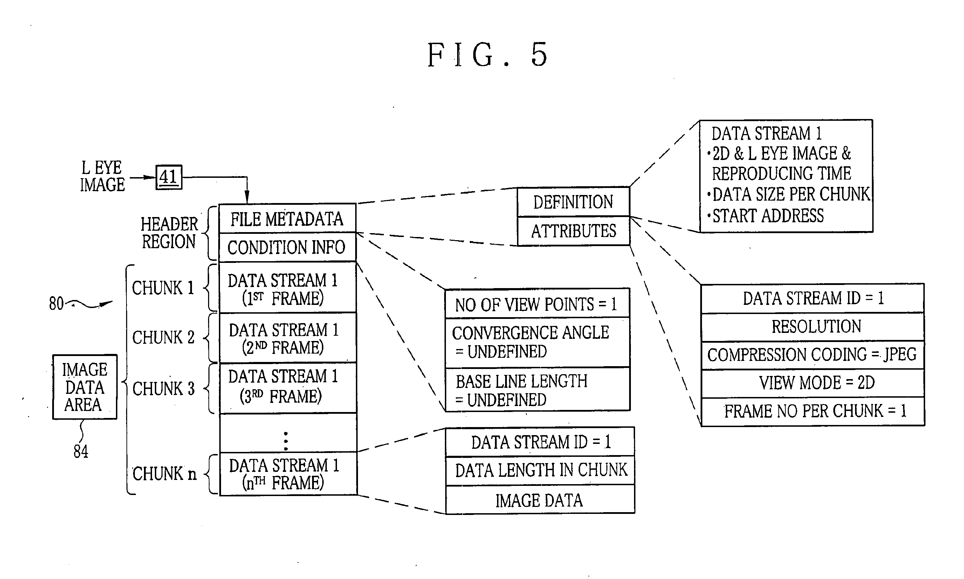

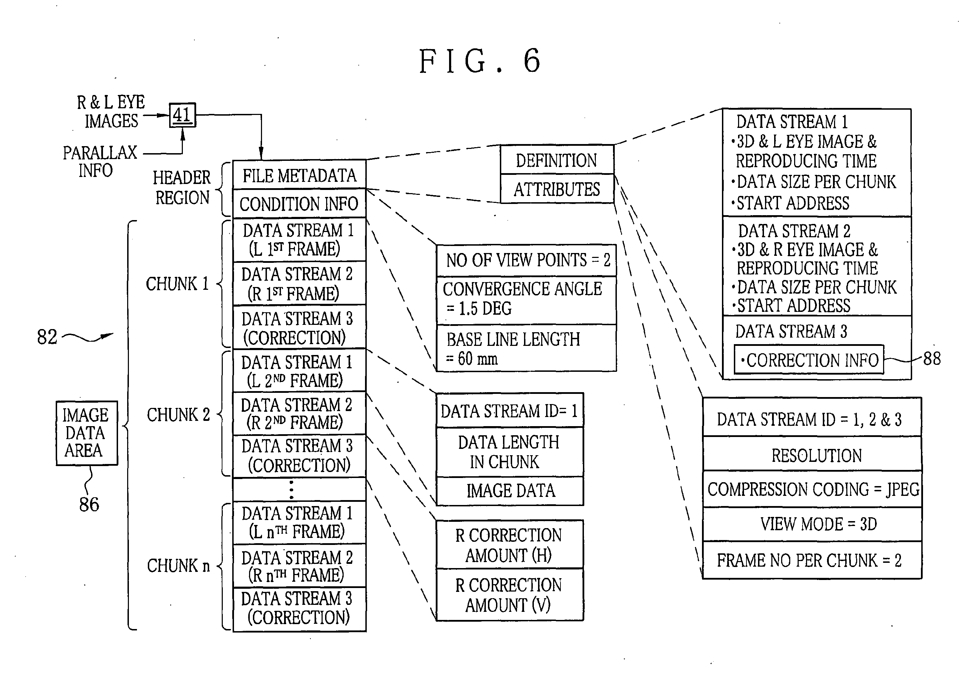

Image pickup by writing to the memory card 19 in the moving image mode is described now by referring to Figs. 5 and 6. In Fig. 5, a file structure of a moving image file of the moving image mode and the two dimensional mode is illustrated in a form compressed in the motion JPEG format by the compressor/expander 40. In Fig. 6, a file structure of a moving image file of the moving image mode and the three dimensional mode is illustrated.

Moving image files 80 and 82 include respectively header areas and image data areas 84 and 86. In each of the header areas, file metadata (stream information) and condition information are written. Each of the image data areas 84 and 86 has a plurality of chunks (blocks) as a number of frames for containing the moving image. Each one of the chunks in Fig. 5 is constituted by one stream. Each one of the chunks in Fig. 6 is constituted by three streams. Various data are written in each of the streams, including a data stream ID at first, and a data length of image data in the chunk, and an image of one frame (more precisely, compressed image data).

The file metadata are related to which information is present in each one of the data streams, and includes a definition and attributes. The definition is related to purposes of the respective data streams, and includes information of a view mode of dimensionality (image type), reproducing time, data size per chunk (at the time of reproduction), start address (of the respective frames of images in the memory card 19) and the like. The attributes include information of a data stream ID, resolution, compression coding, view mode of dimensionality, frame number per chunk, and the like. The condition information includes information of the number of view points, convergence angle, base line length, and the like.

In Fig. 5, each of chunks in the image data area 84 is constituted by one stream which is referred to as a data stream 1. In each one of the data streams, the left eye image GL of one frame is written. The left eye image GL is recorded successively from the first frame to the nth frame as a final frame. Sounds picked up by the microphone are recorded by interleaving between frames (not shown).

Information of the definition is only for the data stream 1, and includes information of 2D (two dimensional) as a view mode and left eye image as an image type. Information of the attributes includes information of data stream ID = 1, compression coding = JPEG, view mode = 2D, frame number per chunk = 1, and the like. The number of view points of the condition information is 1. The convergence angle and the base line length are undefined. For a setting of both the still image mode and the two dimensional mode, only the chunk 1 is recorded.

In Fig. 6, each of chunks in the image data area 86 is constituted by three data streams which are data streams 1, 2 and 3. In the data stream 1, the left eye image GL of one frame is written. In the data stream 2, the right eye image GR of one frame is written. The right and left eye images GL and GR are recorded successively from the first frame to the nth frame as a final frame. Sounds picked up by the microphone are recorded in a separate audio stream (not shown) between the data streams 2 and 3 at a predetermined interval (for example, one for a number of chunks).

Correction information 88 is written to the data stream 3 for right and left eye images GL and GR of the data streams 1 and 2. The correction information 88 is a value defined by changing the positive and negative signs of the parallax information ΔX and ΔY output by the subtractor 53 of the parallax detection device 46. The correction information 88 represents the numbers of pixels with which the right eye image GR is shifted vertically and horizontally so as to register the relevant point of the right eye image GR with the feature point of the left eye image GL. Note that the correction information 88 can be constituted by the parallax information ΔX and ΔY itself.

Specifically in a three dimensional image formed by only superimposing the right and left eye images GL and GR before correction in Fig. 7, a mismatch without registration occurs at the pupil portions between the feature point and the relevant point in the right and left eye images GL and GR, except for a special case where both values ΔX and ΔY of the parallax information are equal to zero (0). However, the mismatch can be compensated for according to the correction information 88 to register the relevant point with the feature point between the right and left eye images GL and GR as illustrated in the lower part of Fig. 7.

The correction for registering the relevant point with the feature point in the right and left eye images GL and GR is carried out by the LCD driver 42. Thus, a three dimensional image is formed and observed by a viewer in such a manner that portions other than the feature point and relevant point are conspicuously viewed in a protruding manner or in a retreating manner in the background.

Information of the definition for the data streams 1 and 2 includes information of 3D (three dimensional) as a view mode and right or left eye image as an image type. Information of the attributes includes information of data stream ID = 1 or 2 or 3, compression coding = JPEG, view mode = 3D, frame number per chunk = 2, and the like. The condition information includes information of number of view points = 2, convergence angle = 1.5 degrees, base line length = 60 mm, and the like. For a setting of both the still image mode and the three dimensional mode, only the chunk 1 is recorded.

The file structure of the moving image file 80 of Fig. 5 is the same as that of a moving image of a single view point compressed in the motion JPEG format well-known in the art. In contrast, the file structure of the moving image file 82 of Fig. 6 is in a form recorded by interleaving in one chunk with each one image set (stereo pair) of right and left eye images GL and GR and the correction information 88 of those.

The operation of the three dimensional camera 2 is described now. At first, the power switch 14 is operated to power the three dimensional camera 2 for photographing. The operation mode selector 20 is operated to select one of the still image mode and the moving image mode. Let the three dimensional mode be selected with the view selector 24. Operation of the two dimensional mode is basically the same as that of the three dimensional mode except for the inactive state of the CCD 34R.

Image light entered through the lens assemblies 31L and 31R is focused on the image pickup surfaces of the CCDs 34L and 34R, which output image signals. The image signals output by the CCDs 34L and 34R are processed by the analog signal processors 35L and 35R for the correlated double sampling, amplification, and A/D conversion.

The images produced by processing in the analog signal processors 35L and 35R are input to the SDRAM 37 through the data bus 36, and stored temporarily. The YC converter 39 converts the images read from the SDRAM 37 in a simplified YC conversion. Then the images are converted by the LCD driver 42 into a composite signal, and are displayed on the LCD 16 as live images.

The release button 15 is depressed halfway while the live image is displayed. The focus detection/photometry units 33L and 33R detect brightness of an object and a distance to the object, to determine an exposure amount, white balance correction amount, and focal length (moving distance for the focus lens for focusing) . The CPU 43 responsively controls operation of the lens systems 11L and 11R, the aperture stop devices 30L and 30R, and the CCDs 34L and 34R, to stand by for image pickup.

When the release button 15 is depressed fully, an image is photographed with a determined exposure amount. An image after the YC conversion in the SDRAM 37 is compressed by the compressor/expander 40, and written to the memory card 19 by the medium controller 41.

In the moving image mode, images are created and written consecutively at a constant frame rate as high as 30 frame per second until the release button 15 is fully depressed next. At the same time, sounds of a near area are picked up by a microphone.

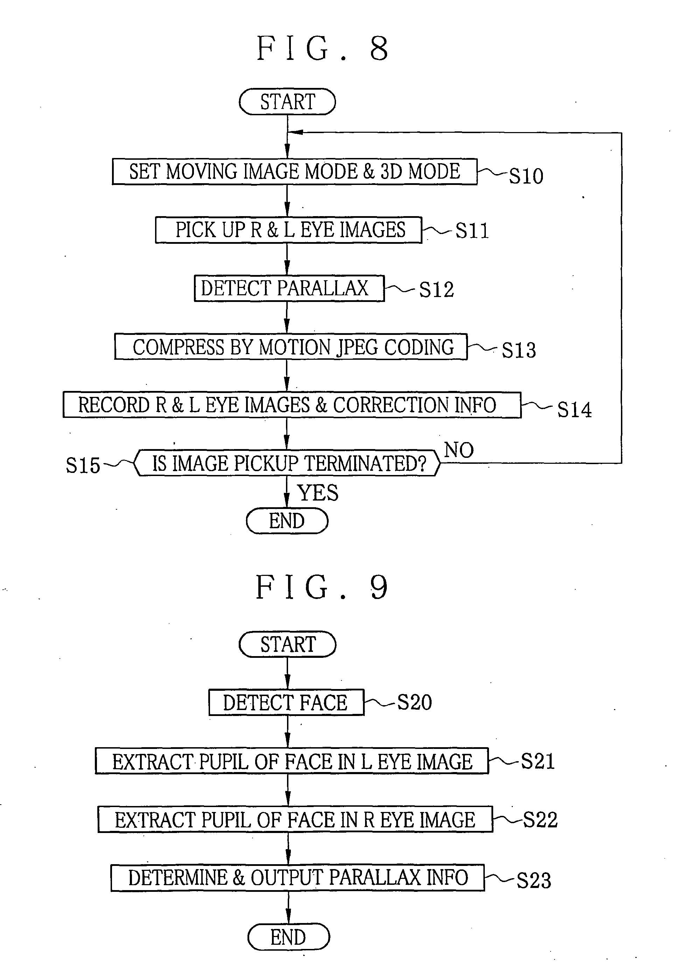

In Fig. 8, the moving image mode and the three dimensional mode are selected in the step 10. The release button 15 is depressed fully to start photographing a moving image in the step S11. The parallax detection device 46 is driven to read right and left eye images GL and GR to the parallax detection device 46 from the SDRAM 37 before the YC conversion. Parallax information of a feature point of a common principal object present in the right and left eye images GL and GR is determined arithmetically in the step S12.

In Fig. 9, the object detector 50 detects a face region of a person from the left eye image GL in the step S20. Then the feature point detector 51 extracts a pupil portion or iris portion EL in the face region in the step S21. The relevant point determining unit 52 detects a pupil portion or iris portion ER in the right eye image GR in correspondence with the pupil portion EL in the left eye image GL in the step S22. Then the subtractor 53 determines the differences ΔX and ΔY in the X and Y-coordinates of the pupil portions EL and ER. The differences are output to the medium controller 41 as parallax information in the step S23.

After determining the parallax information, the right and left eye images GL and GR are converted by the YC converter 39 in the YC conversion, and compressed by the compressor/expander 40 in the motion JPEG format in the step S13. See Fig. 8. The compressed right and left eye images GL and GR are input to the medium controller 41.

The medium controller 41 forms a file structure of the moving image file 82 of Fig. 6 in the memory card 19, and writes file metadata and condition information to the header area. Also, the medium controller 41 operates for interleaved recording in the step S14 to write the left eye image GL to the data stream 1, the right eye image GR to the data stream 2, and the correction information 88 to the data stream 3 according to the parallax information from the parallax detection device 46; with respect to each of the chunks in the image data area 86. This process is repeated until image pickup of the moving image is terminated (YES in the step S15). A moving image file is recorded in the memory card 19 with the plural chunks for image sets as blocks containing the right and left eye images GL and GR and the correction information 88.

To reproduce the moving image file 82 recorded in the three dimensional mode, the right and left eye images GL and GR of each one of the chunks are displayed on the LCD 16 successively by correction in the LCD driver 42 for registering the feature point with the relevant point in the right and left eye images GL and GR according to the correction information 88 of the chunk.

It is possible to view a three dimensional image with high quality in a sharp form because of absence of a B frame or P frame which would be created by the frame correlation processing according to the motion estimation of the MPEG format. As the right and left eye images GL and GR of one image set (stereo pair) is associated with one chunk, no time lag of display occurs between the right and left eye images GL and GR. Although no precise correction information can be obtained in the MPEG format for the B frame or P frame with comparatively low precision in the data, it is possible in the invention to obtain the correction information 88 exactly according to the right and left eye images GL and GR because of no loss due to compression.

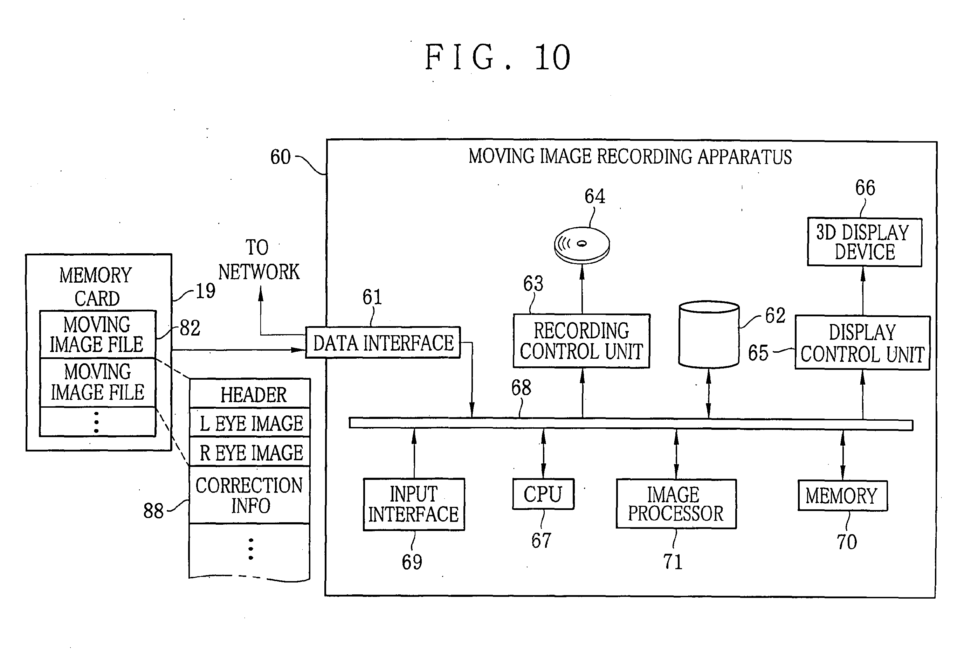

In Fig. 10, a moving image recording apparatus 60 having a moving image coder includes a data interface 61, an internal storage medium 62, a recording control unit 63, a display control unit 65 and a three-dimensional display device 66. A moving image file is retrieved through the data interface 61 from the memory card 19, written to the internal storage medium 62, and coded in the MPEG format. Then the recording control unit 63 writes the moving image file to a removable storage medium 64 such as DVD, BD and the like. The display control unit 65 causes the three-dimensional display device 66 to display a moving image three-dimensionally. Furthermore, the moving image recording apparatus 60 transmits the moving image file through the data interface 61 for video streaming to a network.

A CPU 67 controls various elements in the moving image recording apparatus 60. A data bus 68 connects those to the CPU 67. An input interface 69 is operable to generate a command signal. A memory 70 is accessed by the CPU 67 in response to the command signal. Data and programs are read from the memory 70 by the CPU 67, which performs tasks to control the various elements by running the programs.

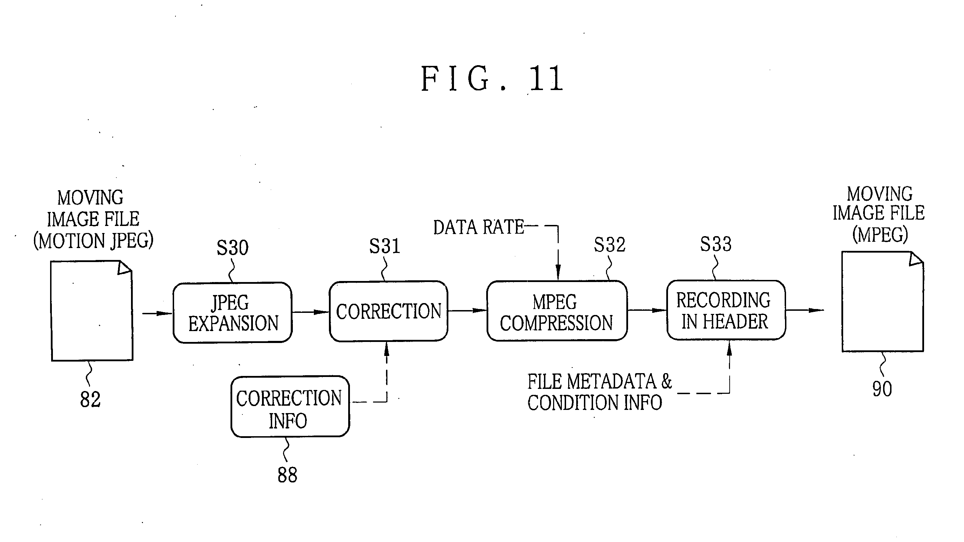

An image processor 71 reads a moving image file from the internal storage medium 62, and performs various tasks of processing of the moving image file in Fig. 11 while controlled by the CPU 67. The image processor 71 expands the moving image file in the JPEG format in the step S30. In the presence of the correction information 88 with the moving image file of Fig. 6, the image processor 71 corrects the right eye image GR of each image set (stereo pair) to register the relevant point with the feature point in the right and left eye images GL and GR according to the correction information 88, which is in a manner similar to the LCD driver 42 in the three dimensional camera 2. If the correction information 88 is not present with the moving image file of Fig. 5, no correction is carried out.

Then the moving image file is compressed again in the MPEG coding in the step S32 at a data rate determined by the CPU 67, namely a frame number of reproduction per second. The MPEG coding may be a method well-known in the field of the moving image.

Finally, the file metadata and condition information of the initial moving image file are written to the header area of the moving image file compressed in the MPEG format. See the step S33. Thus, the moving image file of the motion JPEG format is coded in the MPEG format.

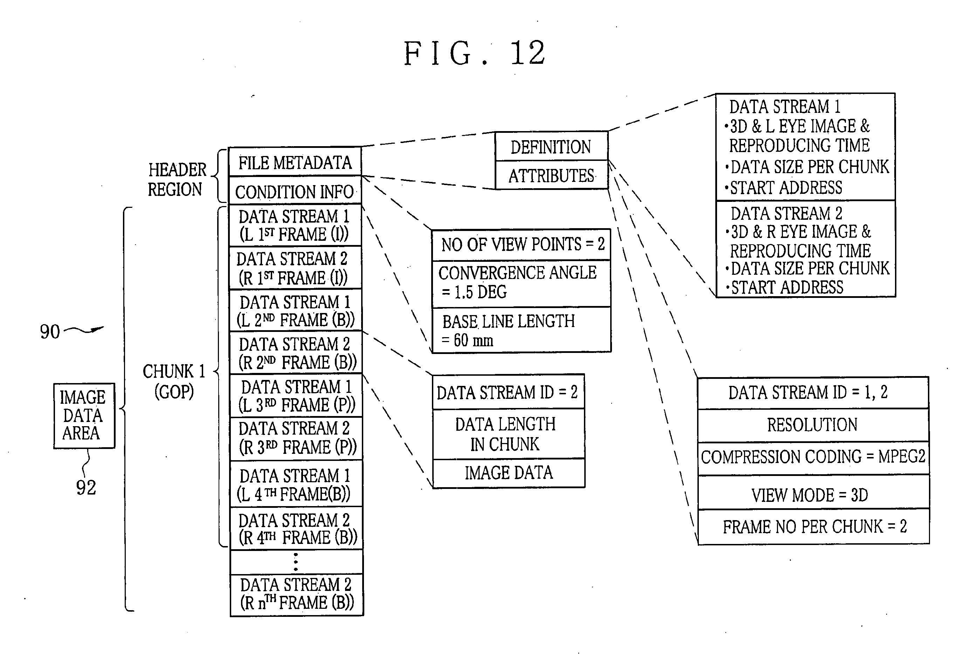

A moving image file 90 of the MPEG format obtained by the image processor 71 has a file structure of Fig. 12. The moving image file 90 is structurally similar to the moving image files 80 and 82 of the motion JPEG format as illustrated in Figs. 5 and 6. Information of various sets in the header area is formed by rewriting of that in the moving image files 80 and 82 in the motion JPEG format.

An image data area 92 has plural chunks (GOP). In a manner similar to the data of Fig. 6, the image sets of images are alternately disposed in the data streams 1 and 2. Four image sets of images are associated with each one of the chunks, namely eight frames as component images. One chunk has one I frame, one P frame and two B frames for right and left sides. Note that second and third frames corresponding to the B and P frames are produced by frame correlation processing according to the motion estimation, and are different from the second and third frames of Fig. 6.

The moving image recording apparatus 60 operates for recording, three dimensional display, and video streaming in a network by use of the moving image file 90 coded in the MPEG format by the image processor 71. As the moving image file 82 of the motion JPEG format is in a file structure similar to that of the moving image file 90 of the MPEG format of Fig. 12, the moving image file 82 can be coded smoothly. As the data are coded in the MPEG format after the correction according to the correction information 88, even a B frame and P frame can be corrected precisely unlike the known technique in which the precise correction is impossible. Although there is small drop in the image quality of the B frame and P frame in the manner of the known technique, it is possible to compensate for the drop in the image quality because of the high precision in the correction according to the invention.

The tasks of the steps S30 to S33 are performed by running the control programs in the image processor 71. However, hardware or devices can be prepared and used for performing those tasks. Also, the task of the parallax detection device 46 in the three dimensional camera 2 can be performed by operation of a program. Performing the tasks by use of programs is effective in high compatibility, because the construction of the apparatus without new functions can be utilized only by adding or exchanging the programs.

In the above embodiment, the format of the still image compression coding is the JPEG format. The format of the moving image compression coding is the MPEG format. However, other formats of coding can be used instead, for example, GIF format, H.246 format and the like.

The number of the view points is two according to the above embodiment, but may be three or more, for example, four. Component images from the plural view points are associated in one chunk with correction information to constitute a moving image file in the manner similar to the above embodiment.

In the above embodiment, the base line length and the convergence angle of the lens systems are fixed in the three dimensional camera. However, those can be variable. It is possible to detect the base line length or the convergence angle with a sensor, or to input the base line length or the convergence angle manually, to adjust the condition information according to any of those.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A moving image recording method for a moving image file (82) of a three dimensional moving image, comprising steps of:
determining parallax information (88, ΔX, ΔY) of parallax of one principal object commonly present in images (GL, GR) of an image set captured simultaneously from multiple view points;
compressing said images in still image compression coding for separately coding said images in said image set, to obtain compressed image data; and
recording in a storage medium (19, 64) said moving image file constituted by plural blocks (86) each one of which includes said compressed image data of said image set and said parallax information being determined.

2. A moving image recording method as defined in claim 1, further comprising a step of, before said determining step, capturing said images of said image set periodically.

3. A moving image recording method as defined in claim 2, wherein said images in said image set are right and left eye images.

4. A moving image recording method as defined in claim 3, wherein said determining step includes:
detecting said object in said right and left eye images;
detecting a feature point of said detected object from a particular one of said right and left eye images;
retrieving a relevant point corresponding to said feature point from a remaining image in said right and left eye images; and
determining a difference between pixel positions of said feature point and said relevant point, to obtain said parallax information.

5. A moving image recording method as defined in claim 4, wherein said object is a face region of a person.

6. A moving image recording method as defined in claim 5, wherein said feature point and said relevant point are a pupil portion or iris portion in said face region of said person.

7. A moving image recording method as defined in claim 2, wherein said still image compression coding is JPEG coding.

8. A moving image recording method as defined in claim 1, further comprising steps of:
expanding said moving image file read from said storage medium;
correcting said expanded image file according to said parallax information for each one of said blocks to minimize said parallax information in said image set; and
compressing said corrected image file according to moving image compression coding for sequential compression according to information of correlation between said images.

9. A moving image recording method as defined in claim 8, wherein said moving image compression coding is MPEG coding.

10. A moving image recording apparatus for a moving image file (82) of a three dimensional moving image, comprising:
a plurality of image sensors (34L, 34R) for simultaneously capturing images (GL, GR) from multiple view points to generate said images of an image set;
a parallax detection device (46) for determining parallax information (88, ΔX, ΔY) of parallax of one principal object commonly present in said images of said image set;
a compressor (40) for compressing said images in still image compression coding for separately coding said images in said image set, to obtain compressed image data; and
a recording control unit (63) for recording in a storage medium (19, 64) said moving image file constituted by plural blocks (86) each one of which includes said compressed image data of said image set and said parallax information being determined.

11. A moving image recording apparatus as defined in claim 10, further comprising:
an expansion device for expanding said moving image file read from said storage medium;
a correction device for correcting said expanded image file from said expansion device according to said parallax information for each one of said blocks to minimize said parallax information of said image set; and
a moving image compressor for compressing said corrected image file from said correction device according to moving image compression coding for sequential compression according to information of correlation between said images.

12. A moving image coding method for a moving image file (82) of a three dimensional moving image, comprising steps of:
determining parallax information (88, ΔX, ΔY) of parallax of one principal object commonly present in images (GL, GR) of an image set captured simultaneously from multiple view points;
compressing said images in still image compression coding for separately coding said images in said image set, to obtain compressed image data;
recording in a storage medium (19, 64) said moving image file constituted by plural blocks (86) each one of which includes said compressed image data of said image set and said parallax information being determined;
expanding said recorded moving image file;
correcting said expanded image file according to said parallax information for each one of said blocks to minimize said parallax information of said image set; and
compressing said corrected image file according to moving image compression coding for sequential compression according to information of correlation between said images.

13. A moving image coder for a moving image file (82) of a three dimensional moving image, comprising:
a parallax detection device (46) for determining parallax information (88, ΔX, ΔY) of parallax of one principal object commonly present in images (GL, GR) of an image set captured simultaneously from multiple view points;
a compressor (40) for compressing said images in still image compression coding for separately coding said images in said image set, to obtain compressed image data;
a recording control unit (63) for recording in a storage medium (19, 64) said moving image file constituted by plural blocks (86) each one of which includes said compressed image data of said image set and said parallax information being determined;
an expansion device (71, S30) for expanding said moving image file read from said storage medium;
a correction device (71, S31) for correcting said expanded image file from said expansion device according to said parallax information for each one of said blocks to minimize said parallax information of said image set; and
a moving image compressor (71, S32) for compressing said corrected image file from said correction device according to moving image compression coding for sequential compression according to information of correlation between said images.
